# EUROPÄISCHE PATENTSCHRIFT

(11) **EP 0 860 408 B1**
(45) Veröffentlichungstag und Bekanntmachung des Hinweises auf die Patenterteilung: **02.01.2002**
(21) Anmeldenummer: 98101731.2
(22) Anmeldetag: 30.01.1998
(51) Int. Cl.: C05F 17/02

(54) **Einrichtung zum Umsetzen von auf einem Kompostierfeld gelagertem, verrottbarem Gut**
Device for shifting and turning of composte piles
Dispositif pour retourner des tas de matériaux à composter

(30) Priorität: 19.02.1997 AT 27497
(43) Veröffentlichungstag der Anmeldung: 26.08.1998
(73) Patentinhaber: VKW Anlagenbau und Umwelttechnik GmbH, 6901 Bregenz (AT)
(72) Erfinder: VKW Anlagenbau und Umwelttechnik GmbH, 6901 Bregenz (AT)
(74) Vertreter: Hefel, Herbert, Dipl.-Ing.

(56) Entgegenhaltungen:
- EP-A- 0 275 347
- WO-A-90/11263
- AT-B- 386 821
- DE-C- 19 508 616
- DE-C- 19 510 225

## Beschreibung

Die Erfindung bezieht sich auf eine Einrichtung zum Umsetzen von auf einem Kompostierfeld gelagertem, verrottbarem Gut zur Kompostierung mit den aus dem Oberbegriff des Patentanspruches 1 entnehmbaren Merkmalen.

Einrichtungen zum Umsetzen von auf einem Kompostierfeld gelagertem, verrottbarem Gut sind bekannt, beispielsweise sind solche Einrichtungen in der AT 386 821 B, in der WO 90/11263 und in der DE 195 10 225 C1 beschrieben. Das Kompostierfeld besitzt eine Eintrittsseite, auf der das zu verrottende Gut aufgebracht wird, und zwar in Form von Mieten. Ferner besitzt das Kompostierfeld eine Austrittsseite, auf der das verrottete Gut ausgetragen wird. Hier an dieser Austrittsseite ist eine quer zur Längserstreckung des Kompostierfeldes angeordnete, ortsfeste Fördereinrichtung installiert, in der Regel handelt es sich um ein Förderband, auf das mit der Abbauvorrichtung das verrottete Gut geladen wird. Das erwähnte stationäre Förderband, das in der Regel reversibel antreibbar ist, trägt das Gut seitlich aus dem Kompostierfeld aus, von wo das verrottete Gut zur Weiterverarbeitung bzw. Weiterverwendung abtransportiert wird.

Es ist nicht auszuschließen, daß das auf das Kompostierfeld gebrachte Gut unter anderem schädliche Stoffe und Materialien enthält, die erst im Zuge der Umschichtung mit der Abbauvorrichtung entdeckt und aufgefunden werden, und die beseitigt werden müssen, damit der Kompost nicht unbrauchbar wird. Mit den bisherigen Einrichtungen der gegenständlichen Art ist dies nur möglich, wenn das gesamte Gut, das zwischen der infizierten Stelle der Miete und der Austragsseite des Kompostierfeldes liegt, ausgetragen wird. Dabei ist nicht ausgeschlossen, daß bei der damit verbundenen Umsetzung noch weiteres ordnungsgemäßes Gut verseucht wird.

In diesem Zusammenhang ist auch die GB 1 451 264 zu erwähnen, die eine Kompostieraufbereitungsanlage zeigt und beschreibt, die aus einem schachtelartigen, langgestreckten Behälter besteht, an dessen einem Ende, nämlich der Austragsseite, ein feststehendes Förderband angeordnet ist, auf welches über einen Schrägförderer, der sich über die gesamte Breite des Behälters erstreckt, das auszutragende Material geladen wird. Dieses Förderband beschickt seinerseits einen fahrbaren Behälter, mit dem das aufbereitete und ausgetragene Material abtransportiert werden kann. Die Materialmenge, die dem einen Ende des Behälters benachbart liegt, wird behandelt, vermischt und gefördert mittels eines endlosen Förderbandes, das sich seitlich des Behälters über dessen gesamte Länge erstreckt und das mit einem zweiten zum Behälter quer verlaufenden Förderband zusammenarbeitet und das dazu dient, das im Behälter befindliche Material gegen das eine Ende des Behälters zu transportieren, an welchem das Austragsförderband liegt. Dieses quer verlaufende Förderband erstreckt sich nur über einen geringen Teil der Breite des Behälters. Eine Möglichkeit, von jeder beliebigen Stelle des Behälters aus das hier gelagerte Gut seitlich auszutragen, auch nur zum Teil, ist hier nicht vorgesehen und mit der hier gezeigten Einrichtung auch gar nicht möglich.

Aus der DE-C-195 08 616 ist eine Einrichtung zum Umsetzen einer Kompostmiete mit den Merkmalen des Oberbegriffs des Patentanspruchs 1 bekannt. Die Anlage besitzt ein Schaufelrad und ein erstes, schräg nach oben gerichtetes Förderband, das das hochgeförderte Material auf ein horizontales Förderband übergibt. Diese beiden Förderbänder sind innerhalb einer verfahrbaren Kranbrücke relativ zueinander ortsfest. Eine zweite Kranbrücke, die parallel zur ersten Kranbrücke liegt, ist auf Schienen gegenüber der ersten Kranbrücke verfahrbar. Auf dieser zusätzlichen Kranbrücke ist ein Förderband verfahrbar gelagert, das sich in Längsrichtung dieser Brücke erstreckt. Dieses sich parallel zur Kranbrücke erstreckende Förderband ist wesentlich kürzer als die Kranbrücken bzw. die Breite des Kompostierfeldes und dient zur Umsetzung des verrottbaren Gutes innerhalb des Kompostierfeldes. Zu diesem Zweck ist das Förderband quer zum Kompostierfeld in Längsrichtung der Kranbrücke verschiebbar. Weiters ist das Förderband in Längsrichtung des Kompostierfeldes bzw. des Förderbandes verschiebbar. In dieser Verschiebungsrichtung ist es zusammen mit einer Abwurfeinrichtung verfahrbar.

Ausgehend von diesem Stand der Technik zielt die Erfindung nun darauf ab, die eingangs erwähnte Einrichtung so zu gestalten, daß von jeder beliebigen Stelle des Kompostierfeldes aus das hier gelagerte Gut seitlich ausgetragen werden kann, und zwar auch nur ein Teil des Gutes. Zur Lösung dieser Aufgabe schlägt die Erfindung jene Maßnahmen vor, die Inhalt und Gegenstand des kennzeichnenden Teiles des Patentanspruches 1 sind. Zweckmäßige Ausgestaltungen der Erfindung sind in den Unteransprüchen festgehalten.

Ohne die Erfindung einzuschränken, wird ein Ausführungsbeispiel anhand der Zeichnung näher erläutert. Es zeigen:

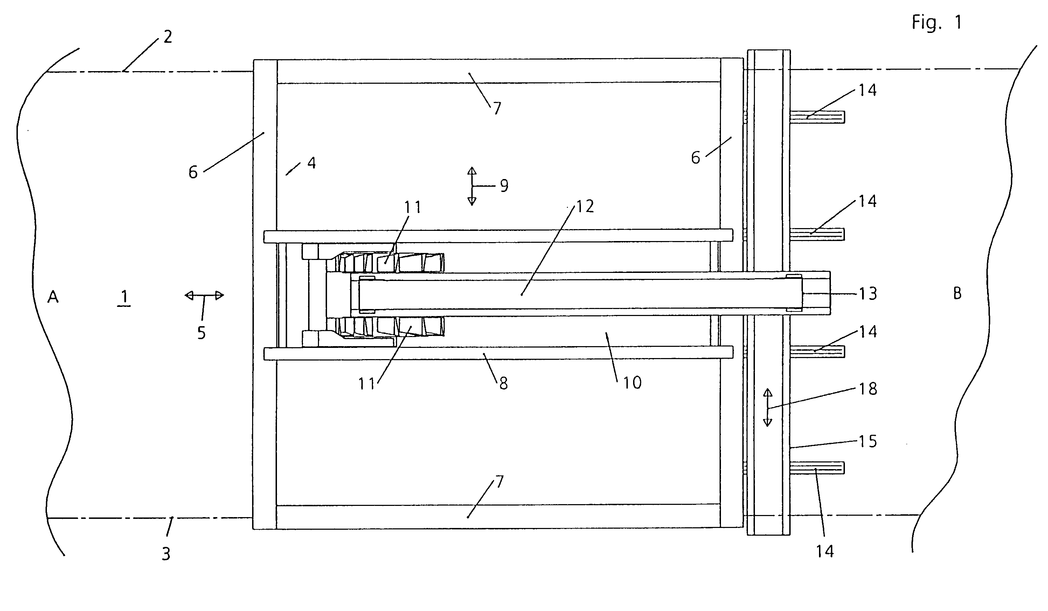

- Fig. 1: eine Draufsicht auf ein Kompostierfeld und die hier eingesetzte Abbauvorrichtung;

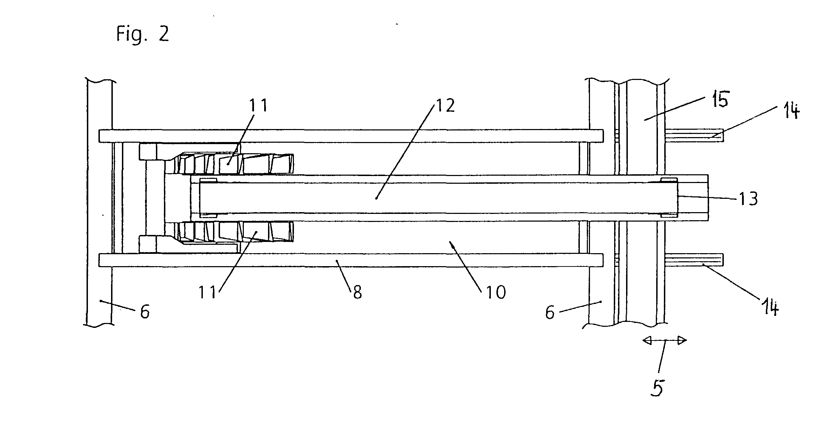

- Fig. 2: eine Draufsicht auf die Abbauvorrichtung in einem gegenüber Fig. 1 vergrößerten Maßstab;
- Fig. 3: eine Seitensicht der Abbauvorrichtung nach Fig. 2.

An den Längsseiten eines Kompostierfeldes 1 mit einer Eintragsseite A und einer Austragsseite B sind Laufbahnen vorgesehen, die hier durch strichpunktierte Linien 2 und 3 nur angedeutet sind. Auf diesen Laufbahnen ist eine Kranbrücke 4 verschiebbar gelagert (Pfeil 5). Diese Kranbrücke 4 besteht aus den beiden Längsträgern 6 und den beiden Querträgern 7. In den Querträgem 7 sind die Laufrollen gelagert. Auf den Längsträgern 6 ist ein Laufwagen 8 verschiebbar (Pfeil 9), an bzw. in dem die Abbauvorrichtung 10 gelagert ist.

Diese hier beispielsweise gezeigte Abbauvorrichtung 10 weist zwei Grab- und Förderräder 11 auf mit fluchtenden Achsen, die voneinander distanziert angeordnet sind. Zwischen den beiden Grab- und Förderrädern 11 ist ein Schrägförderer 12 vorgesehen, zweckmäßig ein Förderband, mit einer oberen Abwurfkante 13, über welche beim betriebsmäßigen Einsatz das umzuschichtende Gut fällt. Abbauvorrichtungen dieser Art sind beispielsweise aus AT 386 821 B bekannt, so daß auf den Aufbau und die Wirkungsweise dieser Abbauvorrichtung hier im einzelnen nicht eingegangen werden muß.

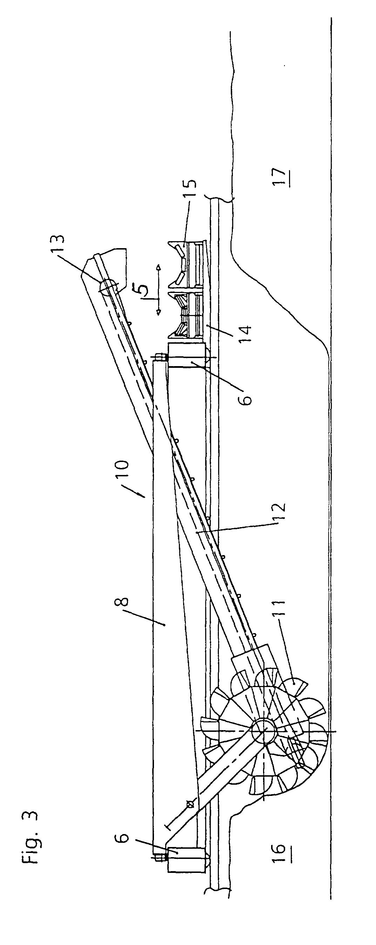

Am Längsträger 6 der Kranbrücke 4, der der Abwurfkante 13 der Abbauvorrichtung 10 benachbart liegt, sind horizontal ausladende Kragarme 14 vorgesehen, welchen ein Horizontalförderer 15, beispielsweise ein Förderband mit reversiblem Antriebsmotor, aufliegt, das auf diesen Kragarmen 14 in Richtung des Pfeiles 5 verschiebbar ist, und zwar in der Weise, daß es entweder im Abwurfbereich der Abbauvorrichtung liegt oder außerhalb desselben. Dies veranschaulicht die Fig. 3, in der die beiden möglichen Lagen dieses Horizontalförderers 15 eingezeichnet sind.

Beim normalen betriebsmäßigen Einsatz, wenn das auf dem Kompostierfeld 1 liegende Gut umgesetzt wird - in Fig. 3 sind die Altmiete 16 und die Neumiete 17 angedeutet -, liegt der Horizontalförderer 15 direkt neben dem Querträger 6 der Kranbrücke 4. Das über die Abwurfkante 13 herabfallende Gut fällt an diesem Horizontalförderer 15 vorbei nach unten und baut dabei die Neumiete 17 auf. Soll nun ein Teil der Altmiete 16 seitlich ausgetragen und aus dem Kompostierfeld 1 entfernt werden, so wird der Horizontalförderer 15 auf den Kragarmen 14 verschoben, so daß er in den Abwurfbereich unterhalb der Abwurfkante 13 gelangt (Fig. 3 - rechte Lage). Das von den Grab- und Förderrädern 11 aufgenommene und über den Schrägförderer 12 hochgefahrene Gut fällt nun auf den Horizontalförderer 15 und kann seitlich ausgetragen werden. Der Antriebsmotor dieses Horizontalförderers 15 ist zweckmäßigerweise reversibel, so daß der Horizontalförderer 15 in zwei Richtungen fördern kann, was hier durch den Pfeil 18 angedeutet ist.

Dank der erfindungsgemäßen Konstruktion kann verrottbares Gut von jeder beliebigen Stelle des Kompostierfeldes 1 seitlich ausgetragen werden, ohne daß es einer aufwendigen und zeitraubenden Umschichtung bedarf. Die Erfindung ist nicht auf die schematisch gezeigte Abbauvorrichtung 10 beschränkt. Es ist möglich, auch andere Abbauvorrichtungen in der erfindungsgemäßen Weise konstruktiv auszugestalten. Die Einrichtung als solche wird zweckmäßigerweise programmgesteuert betrieben.

### Legende zu den Hinweisziffern:

- 1: Kompostierfeld
- 2: strichpunktierte Linie
- 3: strichpunktierte Linie
- 4: Kranbrücke
- 5: Pfeil
- 6: Längsträger
- 7: Querträger
- 8: Laufwagen
- 9: Pfeil
- 10: Abbauvorrichtung
- 11: Grab- und Förderrad
- 12: Schrägförderer
- 13: Abwurfkante
- 14: Kragarm
- 15: Horizontalförderer-Fördereinrichtung
- 16: Altmiete
- 17: Neumiete
- 18: Pfeil

## Patentansprüche

1. Einrichtung zum Umsetzen von auf einem Kompostierfeld (1) gelagertem, verrottbarem Gut zur Kompostierung mit einer längs und quer zum Kompostierfeld (1) verfahrbaren, das umzusetzende Gut aufnehmenden und zumindest in Längsrichtung des Kompostierfeldes (1) transportierenden Abbauvorrichtung (10) mit einer Abwurfkante (13), wobei die Abbauvorrichtung (10) an einem Laufwagen (8) gelagert ist, der seinerseits entlang einer das Kompostierfeld (1) überspannenden Kranbrücke (4) verfahrbar ist, wobei zum seitlichen Austrag des Gutes aus dem Kompostierfeld (1) mindestens eine sich im wesentlichen parallel zur Kranbrücke (4) erstreckende Fördereinrichtung (15) mit vorzugsweise reversierbarer Förderrichtung, insbesondere ein Förderband (15) vorgesehen ist und diese Fördereinrichtung (15) unterhalb der Abwurfkante (13) der Abbauvorrichtung (10) liegt, **dadurch gekennzeichnet, daß** die sich über die gesamte Breite des Kompostierfeldes (1) erstreckende Fördereinrichtung (15) an der Kranbrücke (4) gelagert und gegenüber der Kranbrücke (4) und rechtwinkelig zu deren Längserstreckung in den Abwurfbereich des Gutes und aus diesem Abwurfbereich verschiebbar ist.

2. Einrichtung nach Anspruch 1, **dadurch gekennzeichnet, daß** an der Kranbrücke (4) auf der der Abwurfkante (13) der Abbauvorrichtung (10) benachbarten Seite horizontal ausladende Kragarme (14) angeordnet sind, auf welchen die Fördereinrichtung (15) verschiebbar gelagert ist.

3. Einrichtung nach Anspruch 1 oder 2, **dadurch gekennzeichnet, daß** der Verschiebeweg der Fördereinrichtung (15) mindestens deren Breite (C) entspricht.

## Claims

1. An arrangement for shifting rottable material for compost-making stored on a composting area (1), having an excavating device (10) which has a discharge edge (13), is movable longitudinally and transversely to the composting area (1) and receives the material to be shifted and transports it at least in the longitudinal direction of the composting area (1), the excavating device (10) being mounted on a travelling carriage (8) for its part movable along a crane bridge (4) spanning the composting area (1), at least one conveyor (15) which extends substantially parallel to the crane bridge (4) and the conveying direction of which is preferably reversible, in particular a conveyor belt (15), being provided for lateral delivery of the material from the composting area (1) and this conveyor (15) lying below the discharge edge (13) of the excavating device (10), **characterised in that** the conveyor (15), extending over the entire width of the composting area (1), is mounted on the crane bridge (4) and is displaceable, with respect to the crane bridge (4) and at right angles to the longitudinal extension thereof, into and out of the discharge region of the material.

2. An arrangement according to Claim 1, **characterised in that** horizontally projecting cantilevers (14) are arranged on the crane bridge (4), at the side adjacent to the discharge edge (13) of the excavating device (10), and the conveyor (15) is displaceably mounted on these cantilevers (14).

3. An arrangement according to Claim 1 or 2, **characterised in that** the displacement path of the conveyor (15) corresponds at least to the width (C) thereof.

## Revendications

1. Dispositif pour retourner des tas de matériaux en cours de pourrissage disposés dans une zone de compostage (1) en vue d'en assurer le compostage, comprenant un dispositif de décomposition (10) déplaçable longitudinalement et transversalement par rapport à la zone de compostage (1), recevant les matériaux à retourner et les transportant au moins dans la direction longitudinale de la zone de compostage (1), ledit dispositif ayant une arête de déversement (13), dans lequel le dispositif de décomposition (10) est monté sur un chariot (8), qui, pour sa part, peut se déplacer le long d'un pont de grue (4) recouvrant la zone de compostage (1), tandis qu'il est prévu, pour décharger latéralement les matériaux de la zone de compostage (1), au moins un transporteur (15) s'étendant sensiblement parallèlement au pont de grue (4) avec de préférence un sens de transport réversible, en particulier une bande transporteuse (15), ce transporteur (15) se trouvant en dessous de l'arête de déversement (13) du dispositif de décomposition (10), **caractérisé en ce que** le transporteur (15) s'étendant sur toute la largeur de la zone de compostage (1) est monté sur le pont de grue (4) et peut être soumis à un déplacement par rapport au pont de grue (4) et perpendiculairement à son extension longitudinale dans la zone de déversement des matériaux et hors de cette zone de déversement.

2. Dispositif selon la revendication 1, **caractérisé en ce que** sur le pont de grue (4), du côté adjacent à l'arête de déversement (3) du dispositif de décomposition (10), sont agencés des bras en porte-à-faux horizontalement (14) sur lesquels le transporteur (15) est monté de manière à pouvoir s'y déplacer.

3. Dispositif selon la revendication 1 ou 2, **caractérisé en ce que** le trajet de déplacement du transporteur (15) correspond au moins à sa largeur (C).
